# EUROPEAN PATENT APPLICATION

(11) **EP 1 814 018 A2**
(43) Date of publication of application: **01.08.2007**
(21) Application number: 07100796.7
(22) Date of filing: 19.01.2007
(51) Int. Cl.: G06F 3/041, G06F 3/044

(54) **Display device, liquid crystal display, and method thereof**

(30) Priority: 27.01.2006 KR 20060008850
(71) Applicant: Samsung Electronics Co., Ltd., Suwon-si, Gyeonggi-Do (KR)
(72) Inventor: Lee, Joo-Hyung, Gwacheon-si Gyeonggi-do (KR); Kim, Hyung-Guel, Suji-gu Yongin-si Gyeonggi-do (KR)
(74) Representative: Greene, Simon Kenneth

(57) **Abstract**

The present invention relates to a liquid crystal display ("LCD") that includes a liquid crystal panel assembly including sensing data lines, variable capacitors having a capacitance changed by pressure and connected to the sensing data lines, and reference capacitors connected to the sensing data lines, and a plurality of sensing signal output parts formed separately from the liquid crystal panel assembly and respectively connected to the sensing data lines to generate an output signal based on a sensing data signal flowing through the sensing data lines. Each of the sensing signal output parts includes an output transistor connected to each of the sensing data lines, while the output transistor includes a metal oxide semiconductor ("MOS") transistor that has better performance, smaller size, and lower power consumption than a thin film transistor ("TFT").

## Description

### BACKGROUND OF THE INVENTION

The present invention relates to a display device, a liquid crystal display ("LCD"), and a method thereof. More particularly, the present invention relates to a display device and an LCD for determining a screen touch and the position thereof, and a method thereof.

The liquid crystal display ("LCD"), which is a representative display device, includes two display panels having pixel electrodes and a common electrode and a liquid crystal layer having dielectric anisotropy disposed between the two display panels. The pixel electrodes are arranged in the form of a matrix, and are connected to switching elements including thin film transistors ("TFTs") to be sequentially applied with a data voltage. The common electrode is formed on the entire surface of the display panel and is applied with a common voltage. A pixel electrode and the common electrode with the liquid crystal layer between the electrodes form a liquid crystal capacitor, and the liquid crystal capacitor and a switching element connected to it becomes a standard unit forming a pixel.

The LCD applies a voltage to the two electrodes to generate an electric field in the liquid crystal layer, and by controlling the intensity of the electric field to control the transmittance of light passing through the liquid crystal layer, a desired image can be obtained.

A touch screen panel is an apparatus that draws or writes characters by touching a finger, a touch pen, or a stylus on the screen, and it performs a desired command on a machine including a computer by operating icons. The LCD having a touch screen panel can detect whether or not a user's finger or touch pen touches the screen and can determine touch position information. However, the touch screen panel problematically increases the production cost of such an LCD, decreases production yield by adding an additional process wherein the touch screen panel is adhered to the liquid crystal panel, decreases luminance of the liquid crystal panel, and increases the overall product thickness.

Therefore, in order to resolve such problems, a technology in which a photo sensor including TFTs is built inside of a pixel displaying an image in the LCD has been developed as an alternative to a touch screen panel. The photo sensor can detect whether or not the user's finger touches the screen and the touch position information by sensing variations of light on the screen that are affected by the user's finger.

However, the output characteristic of a photo sensor is changed according to the external environment, for example the intensity of external light, the intensity of a backlight, and the temperature, such that many errors can occur in optical sensing. That is, when the user's finger touches the screen, the sensor may determine that the user's finger does not touch the screen, or when the user's finger does not touch the screen, the sensor may determine that the user's finger does touch the screen.

### BRIEF SUMMARY OF THE INVENTION

The present invention provides a display device, a liquid crystal display ("LCD"), and a method thereof having advantages of accurately determining a screen touch and the position thereof. The present invention also provides a display device, an LCD, and a method thereof having advantages of reducing power consumption and improving a signal to noise ratio ("SNR").

According to an exemplary embodiment of the present invention, an LCD includes a liquid crystal panel assembly including a plurality of sensing data lines, a plurality of variable capacitors that have a capacitance that is changed by pressure and that are connected to the sensing data lines, and a plurality of reference capacitors connected to the sensing data lines. The LCD also includes a plurality of sensing signal output parts formed separately from the liquid crystal panel assembly and respectively connected to the sensing data lines to generate an output signal based on a sensing data signal flowing through the sensing data lines.

Each of the sensing signal output parts may include an output transistor respectively connected to each of the sensing data lines, while it is preferable that the output transistor is a metal oxide semiconductor ("MOS") transistor.

In accordance with exemplary embodiments of the present invention, the LCD may further include a sensing signal processor determining location of a variable capacitor having a changed capacitance, by processing a signal that is applied through the sensing signal output parts.

The sensing signal processor, formed with an integrated circuit ("IC") chip, may include the sensing signal output part.

The LCD may further include a plurality of initializing sections respectively connected to each of the sensing data lines and initializing the sensing data lines with a predetermined voltage.

It is preferable that each of the initializing sections include a first reset switching element connected to a sensing data line among the sensing data lines and applying a first reset voltage inputted according to a first reset control signal to the sensing data line, and a second reset switching element connected to the sensing data line and applying a second reset voltage inputted according to a second reset control signal to the sensing data line.

The first and second reset switching elements may be thin film transistors ("TFTs") or MOS transistors.

The initializing section may be formed on the liquid crystal panel assembly, or formed on the sensing signal processor.

The sensing signal processor may further include a static electricity protection diode part connected between a driving voltage and a ground.

According to another exemplary embodiment of the present invention, a display device includes a plurality of first sensing data lines extended in a first direction, a plurality of second sensing data lines having different lengths from each other and extended in a second direction different from the first direction, a plurality of sensors connected to the first and second sensing data lines and having an output signal changed according to a touch from an exterior, and a plurality of compensation capacitors formed on each of the second sensing data lines, wherein, in each second sensing data line, a ratio of a parasitic capacitance of a parasitic capacitor to a compensation capacitance of a compensation capacitor is substantially identical.

The display device may further include a plurality of sensing signal output parts respectively connected to the first and second sensing data lines to generate an output signal based on the sensing data signal flowing through the first and second sensing data lines.

Each of the sensing signal output parts may include an output transistor connected to each of the first and second sensing data lines, and it is preferable that the output transistor is a MOS transistor.

Preferably, the sensors include a plurality of variable capacitors having a capacitance changed by pressure and connected to the first and second sensing data lines, and a plurality of reference capacitors connected to the first and second sensing data lines, wherein the compensation capacitors are formed with the reference capacitors.

According to still another exemplary embodiment of the present invention, a display device includes a plurality of first sensing data lines extended in a first direction, a plurality of second sensing data lines extended in a second direction different from the first direction, a plurality of sensors connected to the first and second sensing data lines and having an output signal that is changed according to a touch from an exterior, a plurality of first sensing signal output parts respectively connected to the first sensing data lines to generate an output signal based on a sensing data signal flowing through the first sensing data lines, a plurality of second sensing signal output parts respectively connected to the second sensing data lines to generate an output signal based on a sensing data signal flowing through the second sensing data lines, a plurality of first output data lines having a same length as each other and transmitting a sensing signal that is outputted from the first sensing signal output parts to the exterior, a plurality of second output data lines having different lengths from each other and transmitting a sensing signal that is outputted from the second sensing signal output parts to the exterior, and a plurality of compensation capacitors respectively formed on the second output data lines, wherein, in each second output data line, a ratio of a parasitic capacitance of a parasitic capacitor and a compensation capacitance of a compensation capacitor is substantially identical. Each of the sensing signal output parts may include an output transistor respectively connected to each of the first and second sensing data lines, and the output transistor in each of the sensing signal output parts is preferably a TFT.

It is preferable that the sensors include a plurality of variable capacitors having a capacitance that is changed by pressure and connected to the first and second sensing data lines, and a plurality of reference capacitors connected to the first and second sensing data lines, wherein the compensation capacitors are formed with the reference capacitors.

In accordance with yet other exemplary embodiments of the present invention, a method of reducing power consumption in a display device capable of determining a screen touch position, includes providing sensing data lines within a liquid crystal panel assembly of the display device, connecting sensors to the sensing data lines, forming sensing signal output parts separately from the liquid crystal panel assembly, and connecting the sensing signal output parts to the sensing data lines, respectively, to generate an output signal based on a sensing data signal flowing through the sensing data lines. Forming sensing signal output parts may include connecting an MOS output transistor to each of the sensing data lines. The method may further include providing a sensing signal processor, wherein forming sensing signal output parts includes forming the sensing signal output parts within the sensing signal processor.

In accordance with still other exemplary embodiments of the present invention, a method of improving a signal to noise ratio in a display device capable of determining a screen touch position is provided, where the display device includes first sensing data lines extended in a first direction, and second sensing data lines having different lengths from each other extended in a second direction different from the first direction, and the method includes forming a compensation capacitor on each of the second sensing data lines, and providing a substantially identical ratio of a parasitic capacitance of a parasitic capacitor to a compensation capacitance of the compensation capacitor in each of the second sensing data lines.

### BRIEF DESCRIPTION OF THE DRAWINGS

The present invention will become more apparent by further describing exemplary embodiments thereof with reference to the accompanying drawings, in which:
FIG. 1 is a block diagram of an exemplary liquid crystal display ("LCD") according to an exemplary embodiment of the present invention from the standpoint of a pixel;
FIG. 2 is an equivalent circuit diagram illustrating an exemplary pixel of an exemplary LCD according to an exemplary embodiment of the present invention;
FIG. 3 is a block diagram of an exemplary LCD according to an exemplary embodiment of the present invention from the standpoint of a sensor;
FIG. 4 is an equivalent circuit diagram illustrating an exemplary sensor of an exemplary LCD according to an exemplary embodiment of the present invention;
FIG. 5 is a schematic diagram of an exemplary LCD according to an exemplary embodiment of the present invention;
FIG. 6A is an equivalent circuit diagram of a plurality of exemplary sensors connected to an exemplary sensor data line in an exemplary LCD according to an exemplary embodiment of the present invention;
FIG. 6B is an equivalent circuit diagram briefly illustrating FIG. 6A;
FIG. 7 is a timing diagram for the exemplary sensing operation of an exemplary LCD according to an exemplary embodiment of the present invention;
FIG. 8 is an example of an equivalent circuit diagram illustrating the connection of an exemplary initial signal input section, an exemplary sensing signal output part, and an exemplary amplifier, and an exemplary sensing data line and an exemplary output data line in an exemplary LCD according to an exemplary embodiment of the present invention;
FIG. 9A and FIG. 9B show examples of equivalent circuit diagrams briefly illustrating an exemplary sensor respectively connected to an exemplary sensor data line in an exemplary LCD according to another exemplary embodiment of the present invention; and,
FIG. 10 is a layout view illustrating the connection of the exemplary output data line and the exemplary sensing signal processor to compensate the difference of wire resistance of horizontal sensing data lines in an exemplary LCD according to another exemplary embodiment of the present invention.

### DETAILED DESCRIPTION OF THE INVENTION

The present invention will be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art.

In the drawings, the thickness of layers, films, panels, regions, etc., are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

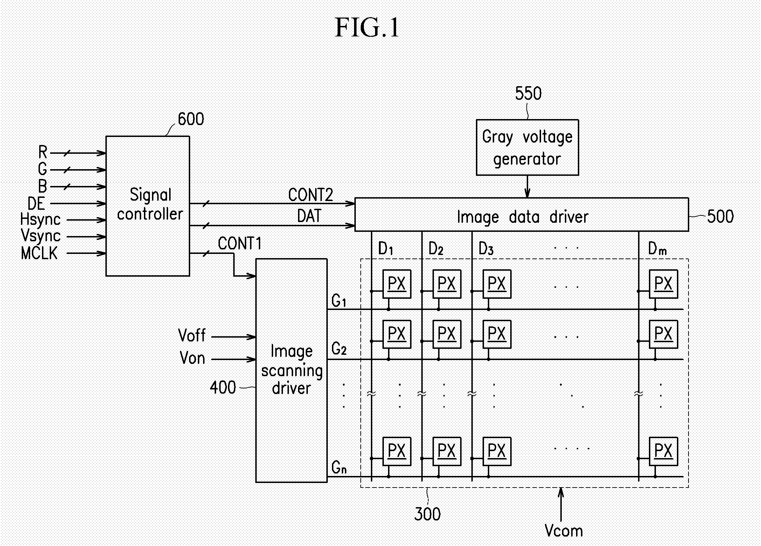

Now, the liquid crystal display ("LCD") that is an exemplary embodiment of a display device according to the present invention will be described in further detail with reference to FIG. 1 to FIG. 5.

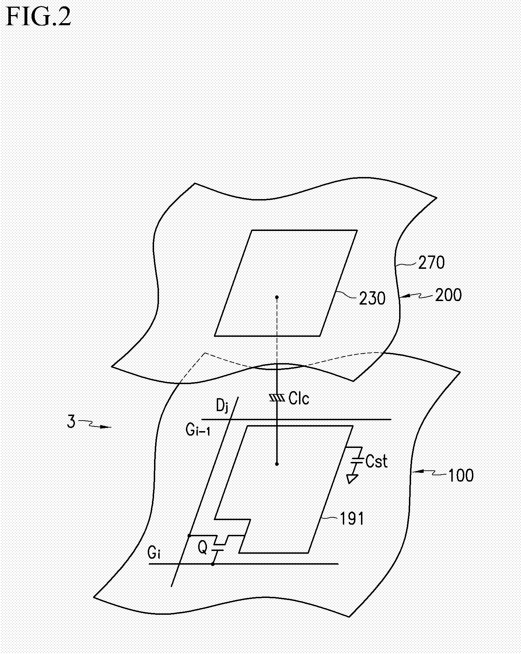

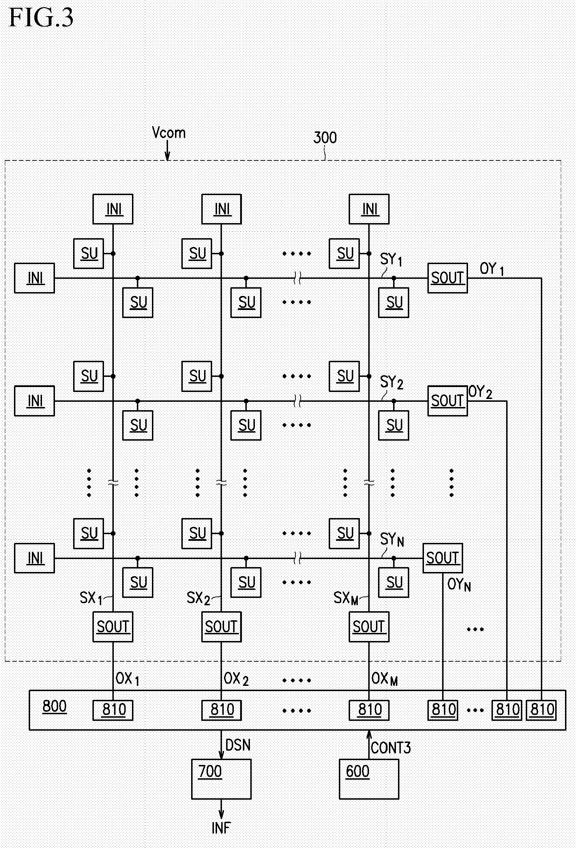

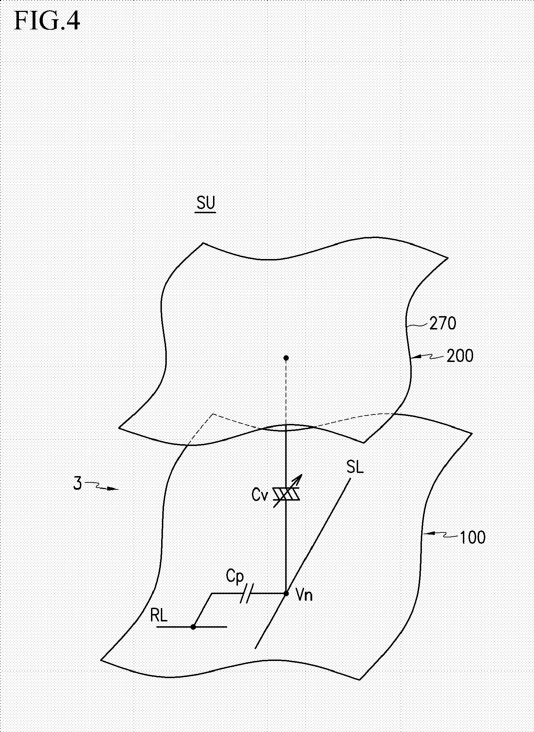

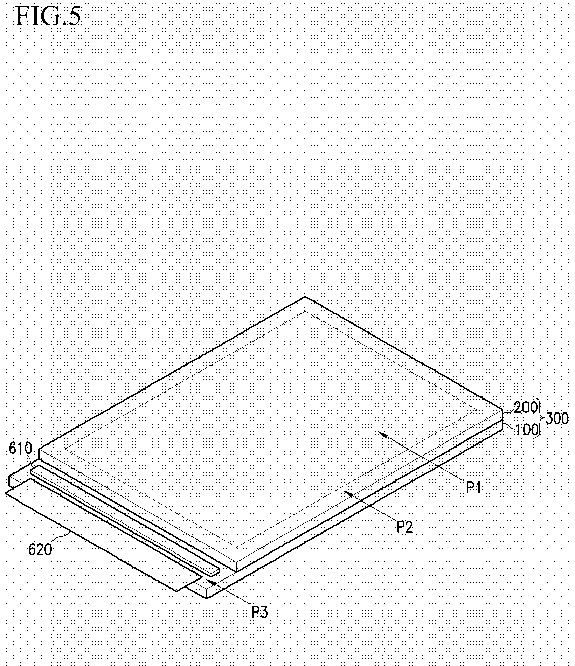

FIG. 1 is a block diagram of an exemplary LCD according to an exemplary embodiment of the present invention from the standpoint of pixel, and FIG. 2 is an equivalent circuit diagram illustrating an exemplary pixel of an exemplary LCD according to an exemplary embodiment of the present invention. FIG. 3 is a block diagram of an exemplary LCD according to an exemplary embodiment of the present invention from the standpoint of sensor, and FIG. 4 is an equivalent circuit diagram illustrating an exemplary sensor of an exemplary LCD according to an exemplary embodiment of the present invention. FIG. 5 is a schematic diagram of an exemplary LCD according to an exemplary embodiment of the present invention.

Referring to FIG. 1 and FIG. 3, an LCD includes a liquid crystal panel assembly 300, an image scanning driver 400 and an image data driver 500 connected to the liquid crystal panel assembly 300, a sensing signal processor 800, a gray voltage generator 550 connected to the image data driver 500, a touch determining unit 700 connected to the sensing signal processor 800, and a signal controller 600 that controls the above-listed devices.

Referring to FIG. 1 to FIG. 6B, the liquid crystal panel assembly 300 includes a plurality of display signal lines G₁-Gₙ and D₁-Dₘ and a plurality of pixels PX that are connected to the display signal lines G₁-Gₙ and D₁-Dₘ and arranged substantially in the form of a matrix, a plurality of sensing signal lines SY₁-SY_{N}, SX₁-SX_{M}, and RL (a reference voltage line), a plurality of sensors SU that are connected to the sensing signal lines SY₁-SY_{N}, SX₁-SX_{M}, and RL and arranged substantially in the form of a matrix, a plurality of initial signal input sections INI respectively connected to one end of each of the sensing signal lines SY₁-SY_{N} and SX₁-SX_{M}, a plurality of sensing signal output parts SOUT respectively connected to the other end of each of the sensing signal lines SY₁-SY_{N} and SX₁-SX_{M}, and a plurality of output data lines OY₁-OY_{N} and OX₁-OX_{M} respectively connected to the sensing signal output parts SOUT.

Referring to FIG. 2 and FIG. 5, the liquid crystal panel assembly 300 includes a thin film transistor ("TFT") array panel 100 and a common electrode panel 200 facing the TFT array panel 100, a liquid crystal layer 3 disposed there between, and a spacer (not shown) that forms a gap between the two display panels 100 and 200 and is compressible to some extent. A distance between the panels 100 and 200 is defined as the cell gap.

The display signal lines G₁-Gₙ and D₁-Dₘ include a plurality of image scanning lines G₁-Gₙ (also known as gate lines) transmitting image scanning signals and a plurality of image data lines D₁-Dₘ (also known as source lines) transmitting image data signals. The sensing signal lines SY₁-SY_{N}, SX₁-SX_{M}, and RL include a plurality of horizontal sensing data lines SY₁-SY_{N} and a plurality of vertical sensing data lines SX₁-SX_{M} transmitting sensing data signals and a plurality of reference voltage lines RL transmitting a reference voltage. The reference voltage lines RL can be omitted if necessary.

The image scanning lines G₁-Gₙ and the horizontal sensing data lines SY₁-SY_{N} are substantially extended in the row direction, a first direction, and are substantially parallel to each other. The image data lines D₁-Dₘ and the vertical sensing data lines SX₁-SX_{M} are substantially extended in the column direction, a second direction, and are substantially parallel to each other. The first direction and the second direction are substantially perpendicular to each other. The reference voltage lines RL are extended in the row direction or column direction.

Each pixel PX, for example, a pixel PX in the i-th row (i=1, 2, ..., n) and the j-th column (j=1, 2, ..., m), is connected to signal lines Gi and Dj and includes a switching element Q connected to the display signal lines G₁-Gₙ and D₁-Dₘ, and a liquid crystal capacitor Clc and a storage capacitor Cst connected to the switching element Q. The storage capacitor Cst can be omitted if necessary.

The switching element Q is a three terminal element such as a TFT provided in the TFT array panel 100. the three terminals include a control terminal, such as a gate electrode, which is connected to an image scanning line G₁-Gₙ, an input terminal, such as a source electrode, which is connected to an image data line D₁-Dₘ, and an output terminal, such as a drain electrode, which is connected to a liquid crystal capacitor Clc and a storage capacitor Cst. At this time, the TFT includes amorphous silicon ("a-Si") or polysilicon.

The liquid crystal capacitor Clc uses a pixel electrode 191 of the TFT array panel 100 and a common electrode 270 of the common electrode panel 200 as two terminals, while the liquid crystal layer 3 between the two electrodes 191 and 270 is used as a dielectric material. The pixel electrode 191 is connected to the switching element Q, while the common electrode 270 is formed on the entire surface, or substantially the entire surface, of the common electrode panel 200 and applied with a common voltage Vcom. Alternatively, the common electrode 270 may be formed on the TFT array panel 100. In this case, at least one of two electrodes 191 and 270 may be formed with a linear or bar shape.

The storage capacitor Cst acts as an auxiliary of the liquid crystal capacitor Clc and includes an additional signal line (not shown) such as a storage electrode line provided on the TFT array panel 100 and a pixel electrode 191, while overlapping an intervening insulator. A predetermined voltage such as a common voltage Vcom is applied to the additional signal line. However, the storage capacitor Cst can be formed by overlapping the pixel electrode 191 with the previous image scanning line that is directly on the pixel electrode with an insulator there between.

In order to implement color display, each pixel PX uniquely displays one of a set of colors, such as primary colors (spatial division) or each pixel PX sequentially displays the colors in turn (temporal division) such that the spatial or temporal sum of the set of colors is recognized as a desired color. An example of a set of the colors or primary colors includes red, green, and blue. FIG. 2 shows an example of the spatial division in which each pixel PX includes a color filter 230 representing one of the colors in the set of colors in a region of the common electrode panel 200 corresponding to the pixel electrode 191. Alternatively, the color filter 230 can be formed above or below the pixel electrode 191 of the TFT array panel 100.

At least one polarizer (not shown) that polarizes the light may be adhered on the outer surface of the liquid crystal panel assembly 300. For example, a first polarized film and a second polarized film may be disposed on the TFT array panel 100 and the common electrode panel 200, respectively. The first and second polarized films adjust a transmission direction of light externally provided into the TFT array panel 100 and the common electrode panel 200, respectively, in accordance with an aligned direction of the liquid crystal layer 3. The first and second polarized films have first and second polarized axes thereof substantially perpendicular to each other, respectively.

As shown in FIG. 4, each of the sensors SU includes a variable capacitor Cv connected to the horizontal or vertical sensing data line (hereinafter referred to as "sensing data line") represented as reference characters SL, and a reference capacitor Cp connected between a sensing data line SL and a reference voltage line RL.

The reference capacitor Cp is formed when the reference voltage line RL and the sensing data line SL of the TFT array panel 100 are overlapped with an intervening insulator (not shown).

The variable capacitor Cv uses the sensing data line SL of the TFT array panel 100 and the common electrode 270 of the common electrode panel 200 as two terminals, while the liquid crystal layer 3 is used as a dielectric material between the two terminals. The capacitance of the variable capacitor Cv is changed with an outside stimulus including the touch of a user applied to the liquid crystal panel assembly 300. Pressure is an example of the outside stimulus. If a pressure is applied to the common electrode panel 200, the spacer is compressed and transformed to change the distance between the two terminals so that the capacitance of the variable capacitor Cv is changed. If the capacitance is changed, the magnitude of the contact voltage or touch voltage Vn, which is dependent on the magnitude of the capacitance, between the reference capacitor Cp and the variable capacitor Cv, is changed. The contact voltage Vn is a sensing data signal flowing through the sensing data line SL, and the occurrence of a touch can be determined based on this. The reference capacitor Cp has a fixed capacitance, and the reference voltage, from the reference voltage line RL, applied to the reference capacitor Cp has a constant voltage so that the contact voltage Vn is changed in the fixed range. Therefore, the sensing data signal flowing through the sensing data line SL can always has a voltage level in the fixed range, and thus, the touch and the touch position can be easily determined.

The sensor SU is disposed between two adjacent pixels PX.

The density of a pair of sensors SU, each of which is connected to the horizontal and vertical sensing data lines SY₁-SY_{N} and SX₁-SX_{M} and which are adjacently disposed in an intersecting region thereof, may be, for example, about 1/4 of the dot density wherein one dot includes, for example, three pixels PX which are arranged parallel to each other and which display three colors of red, green, and blue. In this exemplary embodiment the unit pixels of one dot may work in conjunction to display multiple colors. A dot may then also be defined as the smallest resolution unit of the LCD. However, in an alternative exemplary embodiment, one dot may be composed of at least four unit pixels PX, in such an exemplary embodiment each pixel PX may display one of three colors and one white color.

Examples in which the density of a pair of sensors SU is 1/4 of the dot density include an exemplary embodiment where the horizontal and vertical resolution of a pair of sensors SU is 1/2 of the horizontal and vertical resolution of the LCD, respectively. In such an exemplary embodiment, there may be a pixel row and a pixel column where there is no sensor SU.

An LCD having the density of the sensor SU and the dot density set as described above may be applied to an application requiring high accuracy, such as character recognition. The resolution of the sensor SU can be higher or lower as necessary. For example, the concentration of sensing units SU may be more or less than the above-described ¼ concentration of the concentration of the dots.

In this way, as to the sensor SU according to an exemplary embodiment of the present invention, since the space that the sensor SU and the sensing data line SL occupy is relatively small, the aperture ratio reduction of the pixel PX can be minimized.

A plurality of initial or reset signal input sections INI have the same structure, and a plurality of sensing signal output parts SOUT have the same structure. The structure and operation of the sections and parts INI and SOUT will be further described below.

The output data lines OY₁-OY_{N} and OX₁-OX_{M} include a plurality of horizontal and vertical output data lines OY₁-OY_{N} and OX₁-OX_{M} that are respectively connected to the horizontal and vertical sensing data lines SY₁-SY_{N} and SX₁-SX_{M} through the corresponding sensing signal output parts SOUT. The output data lines OY₁-OY_{N} and OX₁-OX_{M} are connected to the sensing signal processor 800, and transmit the output signals of the sensing signal output parts SOUT to the sensing signal processor 800. The horizontal and vertical output data lines OY₁-OY_{N} and OX₁-OX_{M} are substantially extended in the column direction, the second direction, and are substantially parallel to each other. A portion of the horizontal output data lines OY₁-OY_{N} may be extended in the row direction, the first direction, prior to extending in the column direction.

Referring again FIG. 1 and FIG. 3, the gray voltage generator 550 generates two sets of gray voltages (or reference gray voltages) relating to the transmittance of a pixel PX. One of two sets has a positive value with respect to the common voltage Vcom, while the other has a negative value.

The image scanning driver 400 applies the image scanning signal to the image scanning line G₁-Gₙ, wherein the image scanning signal includes the combination of a gate-on voltage Von that turns on the switching element Q and a gate-off voltage Voff that turns off the switching element Q when the gate-on voltage Von and the gate-off voltage Voff are connected to the image scanning line G₁-Gₙ of the liquid crystal panel assembly 300.

The image data driver 500 is connected to the image data lines D₁-Dₘ of the liquid crystal panel assembly 300, and selects the gray voltage from the gray voltage generator 550 to apply to the image data line D₁-Dₘ as an image data voltage. However, when the gray voltage generator 550 does not provide the voltages of all grays, but provides only a predetermined number of reference gray voltages, the image data driver 500 divides the reference gray voltages to generate gray voltages for all grays, and selects the image data signal from among them.

The sensing signal processor 800 includes a plurality of amplifiers 810 connected to the output data lines OY₁-OY_{N} and OX₁-OX_{M} of the liquid crystal panel assembly 300, and receives the output signal transmitted through each amplifier 810 to perform a signal processing including amplifying so that the analog sensing signal Vo is generated. Then, using an analog-to-digital converter (not shown), the analog sensing signal Vo is transformed into a digital signal to generate a digital sensing signal DSN.

The touch determining unit 700 receives the digital sensing signals DSN from the sensing signal processor 800 to perform calculation processing and determines whether touch is made, if so, the touch position is output to transmit the touch information INF to the external device. The touch determining unit 700 evaluates the operation state of the sensors SU based on the digital sensing signals DSN to control the signal applied thereto.

The signal controller 600 controls the operation of the image scanning driver 400, the image data driver 500, the gray voltage generator 550, and the sensing signal processor 800.

Each of the drivers 400, 500, 550, 600, 700, and 800 can be directly mounted on the liquid crystal panel assembly 300 in the form of at least one integrated circuit ("IC") chip, can be mounted on a flexible printed circuit ("FPC") film (not shown) by adhering to the liquid crystal panel assembly 300 in the form of the tape carrier package ("TCP"), or can be mounted on an additional printed circuit board ("PCB") (not shown). On the other hand, such drivers 400, 500, 550, 600, 700, and 800 can be integrated in the liquid crystal panel assembly 300 with the signal lines G₁-Gₙ, D₁-Dₘ, SY₁-SY_{N}, SX₁-SX_{M}, OY₁-OY_{N}, OX₁-OX_{M}, and RL and the TFTs Q.

Referring to FIG. 5, the liquid crystal panel assembly 300 is divided into a display area P1, an edge region or peripheral area P2, and an exposure region P3. In the display area P1, pixels PX, sensors SU, and most of the signal lines G₁-Gₙ, D₁-Dₘ, SY₁-SY_{N}, SX₁-SX_{M}, OY₁-OY_{N}, OX₁-OX_{M}, and RL are positioned. The common electrode panel 200 includes a light blocking member (not shown) such as a black matrix. The light blocking member covers most of the edge region P2 to block light from the outside. As the common electrode panel 200 is smaller than the TFT array panel 100, a part of the TFT array panel 100 is exposed to form the exposure region P3. A single chip 610 is mounted and the FPC substrate 620 is adhered in the exposure region P3.

The single chip 610 includes drivers for driving the LCD, such as the image scanning driver 400, the image data driver 500, the gray voltage generator 550, the signal controller 600, the touch determining unit 700, and the sensing signal processor 800. Such drivers 400, 500, 550, 600, 700, 800 may be integrated in a single chip 610 to reduce the mounting area, and the power consumption can be lowered. If necessary, at least one of the drivers 400, 500, 550, 600, 700, 800 or at least one circuit device of at least one of the drivers 400, 500, 550, 600, 700, 800 can be disposed outside of the single chip 610.

The image signal lines G₁-Gₙ and D₁-Dₘ and the output data lines OY₁-OY_{N} and OX₁-OX_{M} are extended to the exposure region P3 to be connected to the corresponding drivers 400, 500, and 800.

The FPC substrate 620 receives signals from the external device and transmits the signals to the single chip 610 or the liquid crystal panel assembly 300. Generally, the end formed as a connector (not shown) in order to make a connection with the external device with ease. That is, the FPC substrate 620 may include connectors for easily connecting to the external device at end portions thereof.

The display operation and the sensing operation of the LCD will now be described in accordance with exemplary embodiments.

The signal controller 600 receives the input control signals controlling the input image signals R, G, and B and the display thereof from the external device (not shown). The input image signal R, G, and B contain the luminance information of each pixel PX luminance, and the luminance has a predetermined number, for example, 1024 (=2¹⁰), 256 (=2⁸) or 64 (=2⁶) grays. The input control signals include, for example, a vertical synchronization signal Vsync, a horizontal synchronizing signal Hsync, a main clock signal MCLK, and a data enable signal DE.

The signal controller 600 appropriately processes the input image signals R, G, and B into processed image signals DAT to be suitable for operation of the liquid crystal panel assembly 300 and the image data driver 500 based on the input image signals R, G, and B and the input control signals, generates the image scan control signal CONT1, the image data control signal CONT2, and the sensing data control signal CONT3, and then transmits the image scan control signal CONT1 to the image scanning driver 400, the image data control signal CONT2 and the processed image signal DAT to the image data driver 500, and the sensing data control signal CONT3 to the sensing signal processor 800.

The image scan control signal CONT1 includes a scanning start signal STV instructing the scanning start and at least one clock signal controlling the output of the gate-on voltage Von. The image scan control signal CONT1 may further include the output enable signal OE limiting the duration of the gate-on voltage Von.

The image data control signal CONT2 includes the horizontal synchronization start signal STH informing the transmission start of the image data DAT of a pixel row and the load signal LOAD and the data clock signal HCLK instructing that the image data signal should be applied to the image data line D₁-Dₘ. The image data control signal CONT2 may also further include an inversion signal RVS that inverts the voltage polarity of the image data signal for the common voltage (hereinafter, the voltage polarity of the image data signal for the common voltage will be referred as the polarity of the image data signal).

According to the image data control signal CONT2 from the signal controller 600, the image data driver 500 receives the digital image signals DAT for the pixels PX of one pixel row, selects the gray voltages corresponding to each digital image signals DAT to transform the analog image data voltages to the digital image signals DAT, and applies the transformed voltages to the corresponding image data lines D₁-Dₘ.

According to the image scan control signal CONT1 from the signal controller 600, the image scanning driver 400 applies the gate-on voltage Von to the image scanning lines G₁-Gₙ to turn on the switching elements Q connected to the image scanning lines G₁-Gₙ. The image data voltages applied to the image data lines D₁-Dₘ are then applied to the corresponding pixels PX through the turned-on switching elements Q.

The difference between the voltage of the image data voltage applied to one pixel PX and the common voltage Vcom is represented as the charge voltage of the liquid crystal capacitor Clc, that is, the pixel voltage. According to the magnitude of the pixel voltage, the arrangement of the liquid crystal molecules is differentiated. Accordingly, the polarization of the light that passes through the liquid crystal layer 3 changes. The polarizer or polarized films attached to the LC panel assembly 300 converts light polarization to light transmittance so a desired image can be displayed.

By repeating this procedure by a unit of a horizontal period (also referred to as "1H", which is equal to one period of the horizontal synchronizing signal Hsync and the data enable signal DE), the gate-on voltage Von is sequentially applied to all image scanning lines G₁-Gₙ and the image data signals are applied to all pixels PX to display the image of one frame.

The state of the inversion signal RVS applied to the image data driver 500 is controlled so that when the next frame starts after one frame finishes, the polarity of the image data signal applied to each pixel PX is reversed ("frame inversion"). At this time, even in one frame, the polarity of the image data voltage flowing through the image data line can be changed according to the characteristic of the inversion signal RVS (for example, row inversion and dot inversion), or the polarity of the image data voltages applied to one pixel row can be different (for example, column inversion and dot inversion).

According to the sensing data control signal CONT 3, once in a frame, the sensing signal processor 800 reads the sensing data signals applied through the output data lines OY₁-OY_{N} and OX₁-OX_{M} in the porch section or period between two adjacent frames. In the porch section, the reliability of the sensing data signals are enhanced since the sensing data signals are less affected by the driving signals from the image scanning driver 400 and the image data driver 500. But such reading does not need to be performed in every frame, and if necessary it can be performed once in a plurality of frames. Moreover, in the porch section, the reading can be performed more than twice, while at least one reading can be made in the frame.

After performing the signal processing including amplification of the read analog sensing data signal by using each amplifier 810, the sensing signal processor 800 converts the read sensing data signal into the digital sensing signal DSN to transmit the digital sensing signal DSN to the touch determining unit 700. The sensing signal processor 800 may be included in the single chip 610 that is mounted on the lower exposure region P3 of the liquid crystal panel assembly 300. Moreover, as described above, the single chip 610 may further include the data driver 500 and has a terminal arrangement corresponding to the sensing signal processor 800 and the data driver 500 according to the liquid crystal panel assembly 300.

The operation of the amplifiers 810 of the sensing signal processor 800 will be further described below.

The touch determining unit 700 receives the digital sensing signals DSN and performs appropriate calculation processing to ascertain whether a touch is made and, if so, determines the touch position, and transmits the discovered information INF to the external device. The external device transmits the image signals R, G, and B based on the information INF to the LCD.

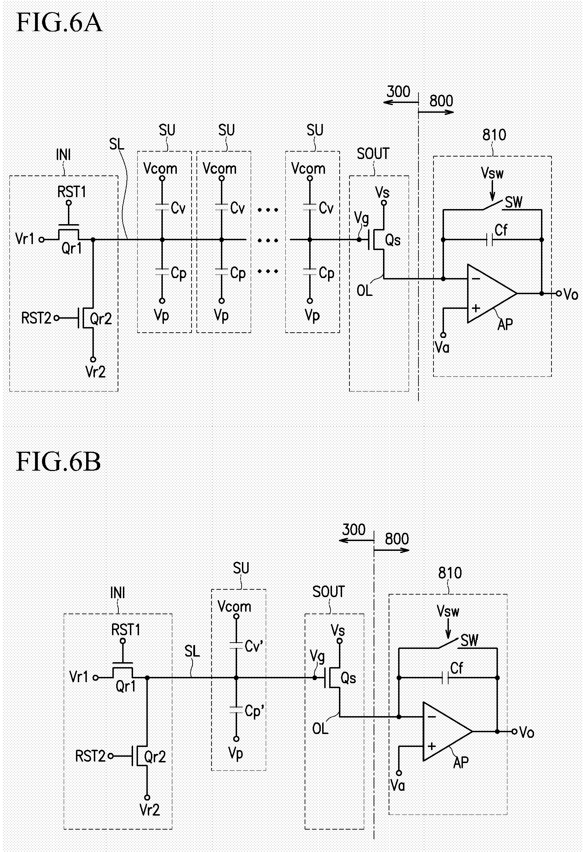

Referring to FIG. 6A to FIG. 7, the structure and the operation of an initial or reset signal input section INI, a sensing signal output part SOUT, and a signal amplifier 810 of a sensing signal processor 800 according to an exemplary embodiment of the present invention will be described.

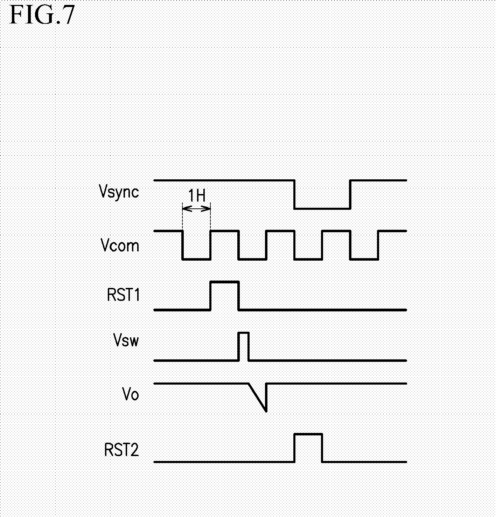

FIG. 6A is an equivalent circuit diagram of a plurality of exemplary sensors connected to an exemplary sensor data line in an exemplary LCD according to an exemplary embodiment of the present invention, FIG. 6B is an equivalent circuit diagram briefly illustrating FIG. 6A, and FIG. 7 is a timing diagram for an exemplary sensing operation of the exemplary LCD according to an exemplary embodiment of the present invention.

As shown in FIG. 6A and FIG. 6B, the liquid crystal panel assembly 300, as illustrated with reference to FIG. 3, includes a plurality of sensing data lines SL (SY₁-SY_{N} and SX₁-SX_{M} in FIG. 3), a plurality of sensors SU connected to sensing data lines SL, initial or reset signal input sections INI connected to one side of the sensing data lines SL, and a plurality of sensing signal output parts SOUT connected between the other side of the sensing data lines SL and output data lines OL (OY₁-OY_{N} and OX₁-OX_{M} in FIG. 3).

Moreover, as illustrated with reference to FIG. 3, the sensing signal processor 800 includes a plurality of amplifiers 810 connected to output data lines OL, respectively.

That is, each of the sensors SU including the variable capacitor Cv and the reference capacitor Cp is connected to one sensing data line SL. The initial or reset signal input sections INI and the sensing signal output parts SOUT are connected to the sensing data lines SL. The variable capacitor Cv is connected to the common voltage Vcom while the reference capacitor Cp is connected to the reference voltage Vp.

As described above, a plurality of variable capacitors Cv include the sensing data lines SL and the common electrode 270 while they are used as two terminals so that a plurality of variable capacitors Cv can be represented as one variable capacitor Cv' illustrated in FIG. 6B, and in practice, the capacitance of the variable capacitor Cv' is substantially distributed uniformly along one sensing data line SL. As shown in FIG. 6B, corresponding to the variable capacitor Cv', a plurality of standard capacitors Cp can be represented as one standard capacitor Cp'.

Each initial or reset signal input section INI includes a first and a second reset transistor Qr1 and Qr2. The first and second reset transistors Qr1 and Qr2 are three terminal element TFTs, including control terminals which are respectively connected to the first and second reset control signals RST1 and RST2, input terminals which are respectively connected to the first and second reset voltages Vr1 and Vr2, and output terminals which are connected to the sensing data line SL.

The first and second reset transistors Qr1 and Qr2 are positioned in the edge region P2 of the liquid crystal panel assembly 300 where the pixels are not disposed, and apply the first and second reset voltages Vr1 and Vr2 to the sensing data line SL according to the first and second reset control signals RST1 and RST2.

Each sensing signal output part SOUT includes an output transistor Qs. The output transistor Qs is also a three terminal element TFT including a control terminal which is connected to the sensing data line SL, an input terminal which is connected to the input voltage Vs, and an output terminal which is connected to the output data line OL. The output transistor Qs is positioned in the edge region P2 of the liquid crystal panel assembly 300, and generates an output signal based on the sensing data signal Vg flowing through the sensing data line SL. As an output signal, an output current can be given. On the other hand, the output transistor Qs can generate a voltage as an output signal.

The reset transistors Qr1 and Qr2 and the output transistor Qs that are TFTs are formed with the switching elements Q. That is, the reset transistors Qr1 and Qr2 and the output transistor Qs may be formed as TFTs on the TFT array panel 100 within the same layers as the switching element Q, thus preventing an increase in thickness of the liquid crystal panel assembly 300.

Each amplifier 810 of the sensing signal processor 800 includes an amplifier AP, a capacitor Cf, and a switch SW.

The amplifier AP has an inversion terminal (-), a non-inversion terminal (+), and an output terminal. The inversion terminal (-) is connected to the output data line OL, the capacitor Cf and the switch SW are connected between the inversion terminal (-) and the output terminal, and the non-inversion terminal (+) is connected to the reference voltage Va. A switching signal Vsw may be applied to the switch SW, to discharge a charged voltage in the capacitor Cf. The amplifier AP and the capacitor Cf are current integrators, performing integration in a predetermined time for the output current from the output transistor Qs to generate the sensing signal Vo.

Referring to FIG. 7, as described above, the LCD according to the present exemplary embodiment performs the sensing operation in the porch section between two adjacent frames, and particularly, it is preferable that the sensing operation is performed in the front porch section prior to the vertical synchronization signal Vsync.

The common voltage Vcom has a high level and a low level, and swings between the high level and the low level in every 1H.

The first and second reset control signals RST1 and RST2 have a turn-on voltage Ton and a turn-off voltage Toff that respectively turn the first and the second reset transistors Qr1 and Qr2 on and off. The turn-on voltage Ton may use the gate-on voltage Von while the turn-off voltage Toff may use the gate-off voltage Voff, although other voltages may be used. The turn-on voltage Ton of the first reset control signal RST1 is applied when the common voltage Vcom is a high level.

If the turn-on voltage Ton is applied to the first reset transistor Qr1, the first reset transistor Qr1 is turned on so that the first reset voltage Vr1 applied to the input terminal is applied to the sensing data line SL to initialize the sensing data line SL as a first reset voltage Vr1. In the meantime, if an operation is commenced and the reference voltage Va is applied to the amplifier 810, the capacitor Cf of the amplifier 810 is charged with the reference voltage Va. Therefore, the magnitude of the output voltage Vo of the amplifier AP is identical with the reference voltage Va.

When the first reset control signal RST1 is a turn-off voltage Toff, the sensing data line SL comes to be in a floating state, and the voltage applied to the control terminal of the output transistor Qs is changed based on the change of the capacitance of the variable capacitor Cv' depending on the contact of sensor SU and the change of the common voltage Vcom. According to the voltage change, the current of the sensing data signal flowing from the output transistor Qs is changed.

In the meantime, after the first reset signal RST1 is changed to the gate-off voltage Voff, the switching signal Vsw is applied to the switch SW so that the voltage that is charged in the capacitor Cf is discharged.

Thereafter, the sensing signal processor 800 reads the sensing signal Vo if a predetermined time passes. At this time, it is preferable that the time to read the sensing signal Vo is set to be within 1 H after the first reset control signal RST1 becomes the turn-off voltage Voff. That is, it is preferable that the sensing signal processor 800 reads the sensing signal Vo before the common voltage Vcom is changed again into a high level. According to the level change of the common voltage Vcom, the sensing signal Vo is also changed.

Since the sensing data signal is changed based on the first reset voltage Vr1, it can have a constant voltage level. Accordingly, the touch and the touch position can be readily determined.

After the sensing signal processor 800 reads the sensing signal Vo, the second reset control signal RST2 becomes the turn-on voltage Ton and causes the second reset transistor Qr2 to turn on. Then, the second reset voltage Vr2 is applied to the sensing data line SL. At this time, the sensing data line SL is reset to the ground voltage since the second reset voltage Vr2 is a ground voltage. The second reset voltage Vr2 is maintained until the next first reset voltage Vr1 is applied to the sensing data line SL. Due to this, until the next first reset voltage Vr1 is applied, the output transistor Qs maintains the turn-off state to reduce the power consumption due to unnecessary operation.

Moreover, the second reset voltage Vr2 and the common voltage Vcom form the electric field on the liquid crystal layer between the common electrode 270 and the sensing data line SL, and the slope direction of the liquid crystal molecules in the liquid crystal layer 3 between the panels 100 and 200 is determined according to the generated electric field within each pixel PX. According to the slope direction of the liquid crystal molecules, the amount of change of the sensing data signal Vg is changed. By setting the second reset voltage Vr2 to an appropriate value, the amount of change of the sensing data signal can be enlarged to improve the sensitivity of the sensor SU.

While the turn-on voltage Ton of the first reset control signal RST1 has been described as being applied when the common voltage Vcom is at a high level, in an alternative embodiment, the turn-on voltage Ton of the first reset control signal RST1 can instead be applied when the common voltage Vcom is a low level, and the sensing signal Vo, in this case, is read after the common voltage Vcom is changed into the high level and before it is changed into the low level again. Moreover, the first reset control signal RST1 can be synchronized to the image scanning signal applied to the last image scanning line Gn.

The second reset control signal RST2 can be a turn-on voltage Ton in a 1 H section directly after the sensing signal Vo is read, or in a 1 H section thereafter.

In this way, by using the variable capacitor Cv, the touch position is determined based on the pressure change applied from the outside. Therefore, whether a touch is made, and if so, the touch position is accurately perceived.

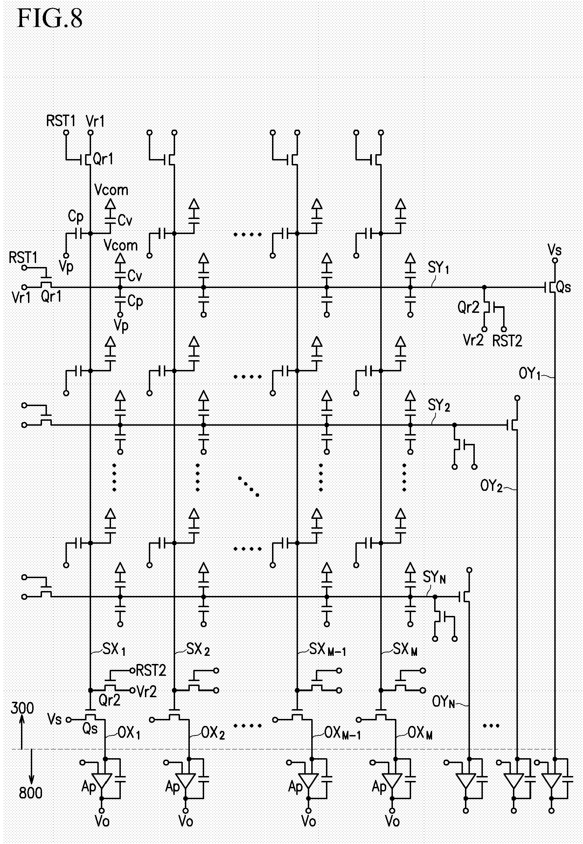

Referring to FIG. 8, the connection relationship of an initial signal input section INI, a sensing signal output part SOUT, an amplifier 810, sensing data lines SX₁-SX_{M} and SY₁-SY_{N}, and output data lines OX₁-OX_{M} and OY₁-OY_{N} will be further described.

FIG. 8 is an example of an equivalent circuit diagram showing the connection relationship of an exemplary initial signal input section, an exemplary sensing signal output part, an exemplary amplifier, an exemplary sensing data line, and an exemplary output data line in an exemplary LCD according to an exemplary embodiment of the present invention.

Referring to FIG. 8, first reset transistors Qr1 that are connected to vertical sensing data lines SX₁-SX_{M} are disposed in an upper side of the edge region P2 of the liquid crystal panel assembly 300, while second reset transistors Qr2 and the output transistor Qs are disposed in a lower side of the edge region P2, opposite the upper side. The first reset transistors Qr1 that are connected to the horizontal sensing data lines SY₁-SY_{N} are disposed in a left edge region of the edge region P2 of the liquid crystal panel assembly 300, while the second reset transistors Qr2 and the output transistors Qs are disposed in a right edge region of the edge region P2, opposite the right edge region. However, if necessary, the second reset transistors Qr2 can be disposed in the regions where the first reset transistors Qr1 are disposed. The size of the output transistors Qs and the first and second reset transistors Qr1 and Qr2 can be different. If they are appropriately distributed to be disposed in the edge region P2 of the liquid crystal panel assembly 300, the edge region P2 of the liquid crystal panel assembly 300 can be minimized.

The vertical output data lines OX₁-OX_{M} extend from the lower edge region of the liquid crystal panel assembly 300 to the exposure region P3 to be connected to the sensing signal processor 800, and the horizontal output data lines OY₁-OY_{N} extend from the right edge region of the liquid crystal panel assembly 300 to the lower-side across the exposure region P3 to be connected to the sensing signal processor 800.

As described above, the density of the image data lines D₁-Dₘ and the density of the output data lines OY₁-OY_{N} and OX₁-OX_{M} are different since the resolution of the LCD and the resolution of the sensors SU are different.

The single chip 610 corresponding to the liquid crystal panel assembly 300 according to the present exemplary embodiment has a terminal arrangement corresponding to image data lines D₁-Dₘ and the output data lines OY₁-OY_{N} and OX₁-OX_{M} having such arrangement.

In the liquid crystal panel assembly 300 described above, the right and the left orientations of the elements can be changed, while the location of a part of the first and second reset transistors Qr1 and Qr2 connected to the horizontal sensing data lines SY₁-SY_{N}, the output transistor Qs, and the horizontal output data lines OY₁-OY_{N} can be changed from the left to the right or from the right to the left.

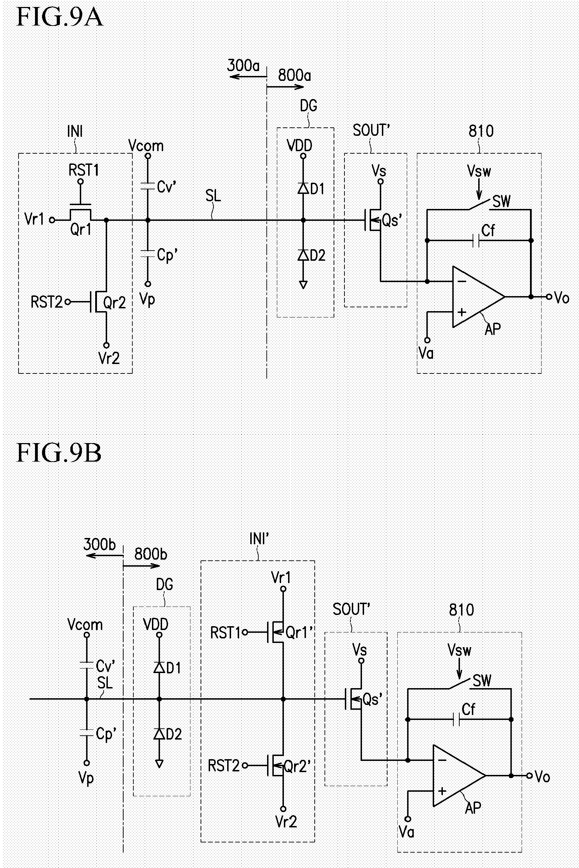

Referring to FIG. 9A and FIG. 9B, an exemplary LCD according to another exemplary embodiment of the present invention will be described.

FIG. 9A and FIG. 9B show examples of equivalent circuit diagrams briefly illustrating an exemplary sensor respectively connected to an exemplary sensor data line in an exemplary LCD according to another exemplary embodiment of the present invention.

The LCD shown in FIG. 9A and FIG. 9B is substantially identical with the LCD shown in FIG. 1 to FIG. 8 in structure and operation except for the structure and forming location of the initial signal input sections INI' and the sensing signal output parts SOUT'. Therefore, the same reference numerals are given to parts that are identical in structure and perform the same operations, and detailed descriptions thereof will be omitted.

Firstly, as to the structure and the forming location of the initial signal input section INI and the sensing signal output part SOUT' with reference to FIG. 9A, the initial signal input section INI is identical with the initial signal input section INI shown in FIG. 3, FIG. 6A, and FIG. 6B, in the structure formed in the liquid crystal panel assembly 300a.

However, with further reference to FIG. 9A, the sensing signal output part SOUT' is made of an n-MOS transistor which is a metal oxide semiconductor ("MOS") transistor where majority carriers are electrons, and is formed in the sensing signal processor 800a with the amplifier 810.

On the other hand, as shown in FIG. 9B, the reset transistors Qr1' and Qr2' and the output transistor Qs' of the initial signal input section INI' and the sensing signal output part SOUT' are formed together with the MOS transistor, while the initial signal input section INI' and the sensing signal output part SOUT' are formed in the sensing signal processor 800b.

At this time, the reset transistor Qr1' is formed of a p-MOS transistor, where majority carriers are holes, and the reset transistor Qr2' and the output transistor Qs' are formed of n-MOS transistors.

In FIG. 9A and FIG. 9B, the sensing data line SL is connected to the exposure region P3 to be connected to the corresponding sensing signal processor 800a or 800b.

In the sensing signal processor 800a/800b, in order to protect a circuit from static electricity inputted from the outside, a static electricity prevention diode part DG coupled in series between the power VDD and the ground from the outside is formed. However, it can be omitted.

The static electricity prevention diode part DG includes a diode D1 connected between the power VDD and the sensing data line SL in the reverse direction and a diode D2 connected between the sensing data line SL and a ground in the reverse direction. The number of diodes connected in the reverse direction between the power VDD and the sensing data line SL and the number of diodes connected between the sensing data line SL and the ground can be 2 and more, respectively.

The operations of the initial signal input section INI/INI' and the sensing signal output part SOUT' shown in FIG. 9A and FIG. 9B are identical with those of the initial signal input section INI and the sensing signal output part SOUT shown in FIG. 6A to FIG. 7.

In FIG. 9A and FIG. 9B, a part or all of the initial signal input section INI/INI' and the sensing signal output part SOUT' is formed on the sensing signal processor 800a, 800b with a MOS transistor. Therefore, the power consumption is reduced, as will be further described below.

As shown in FIG. 3, since the sensing data lines SX₁-SX_{M} and SY₁-SY_{N} are formed on the liquid crystal panel assembly 300 in the horizontal direction or the vertical direction in a long queue, the capacitance of the variable capacitor Cv that is formed between the sensing data lines SX₁-SX_{M} and SY₁-SY_{N} and the common voltage Vcom formed in the common electrode panel 200 is very large.

The sensitivity of the sensor SU is largest when the capacitance of the variable capacitor Cv is identical to the capacitance of the reference capacitor Cp. Therefore, the ratio of the variable capacitor Cv and the reference capacitor Cp is to be 1:1 or 1:2. Therefore, as the capacitance of the variable capacitor Cv and the reference capacitor Cp become enlarged, the level of a signal outputted from the sensor SU is increased.

Accordingly, since the magnitude of the driving voltage of the sensing data line SL becomes large, the magnitude of the reset transistors Qr1 and Qr2 applying the initialization voltage to the sensing data line SL and the output transistor Qs operating according to the output signal from the sensing data line SL and the driving voltage have to be increased. Furthermore, because the electron mobility of the output transistor Qs, which is a TFT, is low, in order to enhance the transconductance that affects the sensitivity of the sensor SU, the magnitude of the output transistor Qs is further increased.

However, as shown in FIG. 9A or FIG. 9B, as the electron mobility is greater than the mobility of the TFT, by using the MOS transistor wherein the operation performance is better than that of the TFT, the initial signal input section INI' or the sensing signal output part SOUT' is formed. Therefore, the magnitude of the output transistor Qs' and the reset transistors Qr1' and Qr2' is decreased less than that of the transistors Qr1 and Qr2, and Qs, shown in FIG. 6A and FIG. 6B. Due to this, the level of the reset voltages RST1 and RST2 and the driving voltage for such operations is decreased less than the level of the driving voltage of the transistors Qr1 and Qr2, and Qs, shown in FIG. 6A and FIG. 6B. Therefore, the power consumed in the reset transistors Qr1' and Qr2' or in the output transistor Qs' shown in FIG. 9A or FIG. 9B is lower than the power consumed in the transistors Qr1 and Qr2, and Qs, shown in FIG. 6A and Fig. 6B.

Moreover, the level of the driving voltage of the MOS transistors Qr1', Qr2', and Qs' is lower than the level of the driving voltage of the TFTs Qr1, Qr2, and Qs. Therefore, the structure of the level shifter (not shown) that converts the output voltage from the additional voltage generator (not shown) to the desired level is simple with a decreased number than that of the TFTs Qr1, Qr2, and Qs. Moreover, the magnitude of the output buffer (not shown) for outputting the level-transformed voltage is also decreased, while the capacitance of the capacitor (not shown) connected to the output buffer is decreased.

Moreover, if the characteristic change of the TFTs Qr1, Qr2, and Qs occurs, including the moving of the threshold voltage of the TFTs Qr1, Qr2, and Qs or the reduction of the electron mobility, as the temperature of the liquid crystal panel assembly 300 rises due to a light source including a backlight, the characteristic of all TFTs Qr1, Qr2, and Qs becomes nonuniform. Therefore, the sensing signal outputted from each sensing data line SL also becomes nonuniform. However, the MOS transistors Qr1', Qr2', and Qs' formed in the sensing signal processors 800a or 800b with an additional driving chip are less affected by the increase of the temperature of the liquid crystal panel assembly 300a or 300b. Therefore, the uniformity of the sensing signal is improved, and thus the signal to noise ratio ("SNR") is improved.

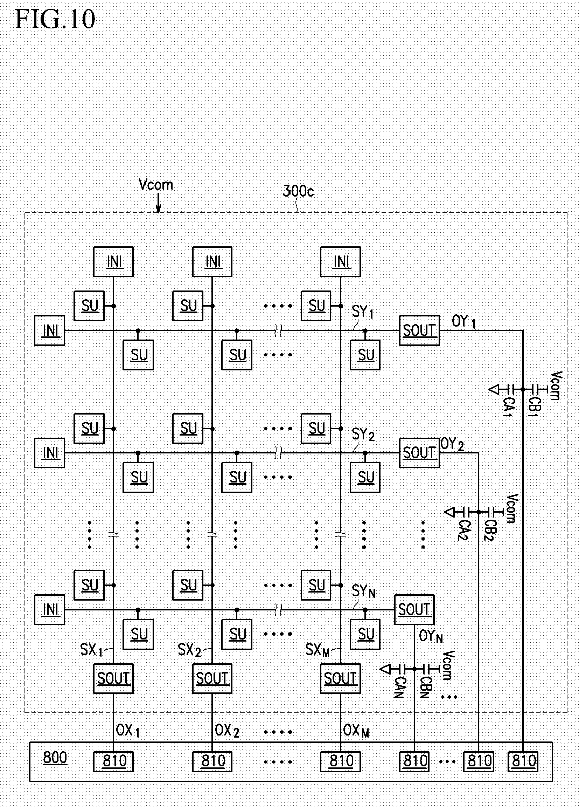

Hereinafter, referring to FIG. 10, an LCD according to another exemplary embodiment will be described.

FIG. 10 is a layout view illustrating the connection of the exemplary output data lines and the exemplary sensing signal processor to compensate the difference of wire resistance of exemplary horizontal sensing data lines in an exemplary LCD according to another exemplary embodiment of the present invention.

As shown in FIG. 10, compensation capacitors CA₁-CA_{N} are connected between each of output data lines OY₁-OY_{N} with lengths that are different and the sensing signal processor 800. Each of the compensation capacitors CA₁-CA_{N} is respectively connected between each of the output data lines OY₁-OY_{N} and a predetermined voltage, and for example, the compensation capacitors CA₁-CA_{N} can be formed with the reference capacitors Cp. In this case, the compensation capacitors CA₁-CA_{N} are connected between the reference voltage line RL and the output data lines OY₁-OY_{N}.

In FIG. 10, the capacitors CB₁-CB_{N} formed between the common voltage Vcom and each output data line OY₁-OY_{N} is a parasitic capacitor formed between the common electrode panel 200 and each of the output data lines OY₁-OY_{N}.

The capacitances of the compensation capacitors CA₁-CA_{N} formed in each of the output data lines OY₁-OY_{N} are designed to be equal to the capacitances of the parasitic capacitors CB₁-CB_{N} of each of the output data lines OY₁-OY_{N}.

Therefore, the capacitances of the parasitic capacitors CB₁-CB_{N} generated in the output data lines OY₁-OY_{N} due to the different lengths are different. However, the ratio of the parasitic capacitors CB₁-CB_{N} and the compensation capacitors CA₁-CA_{N} (capacitance of compensation capacitor /capacitance of parasitic capacitor) is fixed in all output data lines OY₁-OY_{N}. Therefore, the signal change rates of each of the output data lines OY₁-OY_{N} due to the capacitors CA₁-CA_{N} and CB₁-CB_{N} become identical. Thus, the uniformity of the signal outputted from each output data line OY₁-OY_{N} is improved and the SNR is further increased.

In the LCD shown in FIG. 10, the initial signal input section INI and the sensing signal output part SOUT are formed on the liquid crystal panel assembly 300c. However, on the other hand, as shown in FIG. 9A and FIG. 9B, the initial signal input section INI or the sensing signal output part SOUT can be formed in the sensing signal processor 800a or 800b. As described above, the reset transistors Qr1 and Qr2 and the output transistor Qs of the initial signal input part and the sensing signal output part are MOS transistors. In this case, the sensing data lines SY₁-SY_{N} extend toward the horizontal direction and toward the vertical direction in the vicinity of the outside of the region where the sensors SU are formed to be connected to the sensing signal processor 800. The compensation capacitors CA₁-CA_{N} are formed between the reference voltage line RL and the sensing data lines SY₁-SY_{N} that are extended toward the vertical direction.

In view of the above-described exemplary embodiments of the present invention, a method of reducing power consumption in a display device capable of determining a screen touch position is further provided, the method including providing sensing data lines within a liquid crystal panel assembly of the display device, connecting sensors to the sensing data lines, forming sensing signal output parts separately from the liquid crystal panel assembly, and connecting the sensing signal output parts to the sensing data lines, respectively, to generate an output signal based on a sensing data signal flowing through the sensing data lines. The method may further include connecting a metal oxide semiconductor output transistor to each of the sensing data lines, and providing a sensing signal processor and forming the sensing signal output parts within the sensing signal processor.

Also in view of the above-described exemplary embodiments of the present invention, a method of improving a signal to noise ratio in a display device capable of determining a screen touch position includes forming a compensation capacitor on each of second sensing data lines, and providing a substantially identical ratio of a parasitic capacitance of a parasitic capacitor to a compensation capacitance of the compensation capacitor in each of the second sensing data lines.

In an exemplary embodiment of the present invention, a sensor using a variable capacitor and a reference capacitor is given as an example, however, it is not restricted in such device, but other types of sensing devices can be applied.

Further, in an exemplary embodiment of the present invention, the LCD is described as a display device, however it is not restricted in such device, but it can be applied in a flat panel display including a plasma display device ("PDP") and an organic light emitting diode display ("OLED").

According to the present invention, by providing a sensor including a variable capacitor, based on pressure applied to the liquid crystal panel assembly, the touch and the touch position can be found.

The initial signal input section or the sensing signal output part is not formed on the liquid crystal panel assembly with a TFT, but is formed on the sensing signal processor with a MOS transistor. Therefore, the power consumption is reduced, the structure of the periphery applying a voltage to the initial signal input sections or the sensing signal output part is simplified, and the power consumption of the periphery is decreased. Moreover, as the characteristic change of the MOS transistor due to the external environment is not large, the sensitivity is improved and the SNR is increased.

Further, as the non-uniformity of the signal due to the difference of the length of the horizontal sensing data line is decreased, the SNR is further increased.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A liquid crystal display comprising:
a liquid crystal panel assembly including a plurality of sensing data lines, a plurality of variable capacitors that have capacitance that changes by pressure and are connected to the sensing data lines, and a plurality of reference capacitors connected to the sensing data lines; and
a plurality of sensing signal output parts formed separately from the liquid crystal panel assembly and respectively connected to the sensing data lines to generate an output signal based on a sensing data signal flowing through the sensing data line.

2. The liquid crystal display of claim 1, wherein each of the sensing signal output parts comprises an output transistor connected to each of the sensing data lines, respectively.

3. The liquid crystal display of claim 2, wherein the output transistor is a metal oxide semiconductor transistor.

4. The liquid crystal display of claim 2 or 3, further comprising a sensing signal processor determining location of a variable capacitor having a changed capacitance by processing a signal that is applied through the sensing signal output parts.

5. The liquid crystal display of claim 4, wherein the sensing signal processor is formed with an integrated circuit chip and comprises the sensing signal output parts.

6. The liquid crystal display of claim 5, further comprising a plurality of initializing sections respectively connected to the sensing data lines and initializing the sensing data lines with a predetermined voltage.

7. The liquid crystal display of claim 6, wherein each of the initializing sections comprises:
a first reset switching element connected to a sensing data line among the plurality of sensing data lines and applying a first reset voltage inputted according to a first reset control signal to the sensing data line; and
a second reset switching element connected to the sensing data line and applying a second reset voltage inputted according to a second reset control signal to the sensing data line.

8. The liquid crystal display of claim 7, wherein the first and second reset switching elements are thin film transistors.

9. The liquid crystal display of claim 7, wherein the first and second reset switching elements are metal oxide semiconductor transistors.

10. The liquid crystal display of claim 7, 8 or 9, wherein the initializing sections are formed on the liquid crystal panel assembly.

11. The liquid crystal display of claim 7, 8 or 9, wherein the initializing sections are formed on the sensing signal processor.

12. The liquid crystal display of any of claims 4 to 11, wherein the sensing signal processor further comprises a static electricity protection diode part connected between a driving voltage and a ground.

13. A display device comprising:
a plurality of first sensing data lines extended in a first direction;
a plurality of second sensing data lines having different lengths from each other and extended in a second direction different from the first direction;
a plurality of sensors connected to the first and second sensing data lines and having an output signal that changes according to a touch from an exterior; and
a plurality of compensation capacitors formed on each of the second sensing data lines,
wherein, in each second sensing data line, a ratio of a parasitic capacitance of a parasitic capacitor to a compensation capacitance of a compensation capacitor is substantially identical.

14. The display device of claim 13, further comprising a plurality of sensing signal output parts respectively connected to the first and second sensing data lines to generate an output signal based on a sensing data signal flowing through the first and second sensing data lines.

15. The display device of claim 14, wherein each of the sensing signal output parts comprises an output transistor connected to each of the first and second sensing data lines.

16. The display device of claim 15, wherein the output transistor is a metal oxide semiconductor transistor.

17. The display device of any of claims 13 to 16, wherein:
the sensors comprise a plurality of variable capacitors having a capacitance changed by pressure and connected to the first and second sensing data lines and a plurality of reference capacitors connected to the first and second sensing data lines;
and the compensation capacitors are formed with the reference capacitors.

18. A display device comprising:
a plurality of first sensing data lines extended in a first direction;
a plurality of second sensing data lines extended in a second direction different from the first direction;
a plurality of sensors connected to the first and second sensing data lines and having an output signal changed according to a touch from an exterior;
a plurality of first sensing signal output parts respectively connected to the first sensing data lines to generate an output signal based on a sensing data signal flowing through the first sensing data lines;
a plurality of second sensing signal output parts respectively connected to the second sensing data lines to generate an output signal based on a sensing data signal flowing through the second sensing data lines;
a plurality of first output data lines having a same length as each other and transmitting a sensing signal outputted from the first sensing signal output parts to the exterior;
a plurality of second output data lines having different lengths from each other and transmitting a sensing signal outputted from the second sensing signal output parts to the exterior; and
a plurality of compensation capacitors respectively formed on the second output data lines,
wherein, in each second output data line, a ratio of a parasitic capacitance of a parasitic capacitor and a compensation capacitance of a compensation capacitor is substantially identical.

19. The display device of claim 18, wherein each of the sensing signal output parts comprises an output transistor respectively connected to each of the first and second sensing data lines.

20. The display device of claim 19, wherein the output transistor in each of the sensing signal output parts is a thin film transistor.

21. The display device of claim 18, 19 or 20, wherein the sensors comprise:
a plurality of variable capacitors having a capacitance changed by pressure and connected to the first and second sensing data lines; and
a plurality of reference capacitors connected to the first and second sensing data lines,
wherein the compensation capacitors are formed with the reference capacitors.

22. A method of reducing power consumption in a display device capable of determining a screen touch position, the method comprising:
providing sensing data lines within a liquid crystal panel assembly of the display device;
connecting sensors to the sensing data lines;
forming sensing signal output parts separately from the liquid crystal panel assembly; and,
connecting the sensing signal output parts to the sensing data lines, respectively, to generate an output signal based on a sensing data signal flowing through the sensing data lines.

23. The method of claim 22, wherein forming sensing signal output parts includes connecting a metal oxide semiconductor output transistor to each of the sensing data lines.

24. The method of claim 22 or 23, further comprising providing a sensing signal processor, wherein forming sensing signal output parts includes forming the sensing signal output parts within the sensing signal processor.

25. A method of improving a signal to noise ratio in a display device capable of determining a screen touch position, the display device having first sensing data lines extended in a first direction, and second sensing data lines having different lengths from each other extended in a second direction different from the first direction, the method comprising:
forming a compensation capacitor on each of the second sensing data lines; and,
providing a substantially identical ratio of a parasitic capacitance of a parasitic capacitor to a compensation capacitance of the compensation capacitor in each of the second sensing data lines.
